Europäisches Patentamt

European Patent Office

Office européen des brevets

(11) Publication number: 0 503 406 A1

# EUROPEAN PATENT APPLICATION

(21) Application number: 92103500.2

(22) Date of filing: 29.02.92

(51) Int. Cl.⁵: **B60C 11/08**, B60C 11/00

(30) Priority: 08.03.91 US 666816

(43) Date of publication of application:
16.09.92 Bulletin 92/38

(84) Designated Contracting States:
DE ES FR GB IT

(71) Applicant: THE GOODYEAR TIRE & RUBBER
COMPANY
1144 East Market Street
Akron, Ohio 44316-0001(US)

(72) Inventor: Glover, William Eugene
3055 Woodland Road
Akron, Ohio 44312(US)
Inventor: Attinello, John Steven
1251 Cosmos Street
Hartville, Ohio 44632(US)
Inventor: Landers, Samuel Patrick
12018 Shoshone Avenue
N.W. Uniontown, Ohio 44685(US)

(74) Representative: Leitz, Paul
Goodyear Technical Center, Patent
Department
L-7750 Colmar-Berg(LU)

(54) Tire tread with improved noise properties.

(57) A tire tread which optimizes noise properties of a tire is provided. The tread has radiused leading and optionally radiused trailing lug edges (37,39). In a preferred embodiment the tire tread also has arcuate lateral grooves such that no two lugs (18) are in alignment on a lateral groove. Also, the tread may be divided into at least two annular portions and the annular tread portions may be skewed such that no two lugs in the tread are in lateral alignment.

FIG-1

## BACKGROUND OF THE INVENTION

This invention relates to a tire tread which optimizes noise characteristics of a tire.

This application is somewhat related to U. S. Applications Docket Numbers 90447A, 90536A, 91033A, 91034A, 91035A and 91036A, filed on even date herewith, and incorporated by reference.

Because of recent design changes in automobiles, such as front wheel drive, new suspension systems, and antilock brakes, the design requirements of tires have changed. The design changes of automobiles have caused irregular wear problems in tires, and design changes made in tires to meet these problems have sometimes revealed tire noise problems.

Aside from the above, it is a continuing goal in the art to reduce tire noise.

It is an object of the present invention to provide a tire tread which reduces the noise characteristics of the tire.

Other objects of the invention will be apparent from the following description and claims.

## SUMMARY OF THE INVENTION

A directional tire tread which optimizes noise characteristics of a tire on paved surfaces is provided. The tread has lateral grooves and circumferential grooves that define lugs and a net-to-gross ratio of 50% to 80%. The lugs have radiused leading edges. In one embodiment, the lateral grooves are arcuate such that no two lugs along a lateral groove are in lateral alignment. In a further embodiment, the tread may be divided into at least two annular portions, and the annular portions may be skewed such that no two lugs in the tire tread are in annular alignment.

## Definitions

"Carcass" means the tire structure apart from the belt structure, tread, undertread, and sidewall rubber over the plies, but including the beads.

"Crown" refers to the circumferentially outermost portion of the carcass substantially within the width limits of the tread.

"Design Cycle" is a mold manufacturing term that refers to the smallest fundamental unit of tire tread that contains all design features and is continually repeated around the tire with slightly varying lengths according to a specific pitching sequence.

"Design Cycle Pitch" is a mold manufacturing term that refers to the circumferential distance from the beginning boundary of a design cycle to its end and the beginning boundary of the next design cycle.

"Equatorial plane (EP)" means the plane perpendicular to the tire's axis of rotation and passing through the center of its tread.

"Groove" means an elongated void area in a tread that may extend circumferentially or laterally about the tread in a straight, curved, or zig-zag manner. Circumferentially and laterally extending grooves sometimes have common portions and may be subclassified as "wide", "narrow", or "slot". In the appended drawings, slots are illustrated by single lines because they are so narrow. Grooves generally remain open in a tie footprint.

"Sipes" refer to small slots molded into ribs of tire that subdivides the tread surface and improves traction characteristics. Sipes generally close in a tire footprint.

"Logarithmic spiral" refers to a spiral that has a gradually expanding arc, as opposed to a substantially constant arc as in for example an Archemedic spiral (i.e. as seen in a phonograph record).

"Lugs" refer to discontinuous radial rows of tread rubber in direct contact with the road surface.

"Net-to-gross" refers to the ratio of the ground contacting surface of a tread to the total tread area.

"Open angle" refers to a groove wall angle which causes the groove to be wider at the top as compared to its width at the tread base.

"Pitch" refers to the distance from one peak in the tread pattern to the next.

"Pitch boundary" refers to substantially lateral line in the circumference of the tire that define beginning or end of the pitch. The pitch boundary may be defined by the center of a lateral groove. A pitch boundary "shift" refers to a circumferential displacement of the line.

"Pitch Tone" refers to a potentially objectionable sound in which the sound energy is concentrated into a narrow frequency band and is perceived essentially as a single frequency that clearly stands out from the surrounding background noise.

"Pneumatic tire" means a laminated mechanical device of generally toroidal shape (usually an open-torus) having beads and a tread and made of rubber, chemicals, fabric and steel or other materials. When mounted on the wheel of a motor vehicle, the tire through its tread provides traction and contains the fluid that sustains the vehicle load.

"Rib" means a circumferentially extending strip of rubber on the tread which is defined by at least one circumferential "wide groove" and either a second such groove or a lateral edge of the tread, the strip of rubber being laterally undivided by full-depth narrow or wide grooves.

"Tread" means a molded rubber component which, when bonded to a tire casing, includes that portion of the tire that comes into contact with the road when the tire is normally inflated and under normal load.

"Tread width" means the arc length of the tread surface in the axial direction, that is, in a plane parallel to the axis of rotation of the tire.

## BRIEF DESCRIPTION OF THE DRAWINGS

Fig. 1 illustrates an embodiment of a tire having a tread of the invention wherein the tread includes an aqua channel.

Fig. 2 illustrates a tire having a tread with an annular rib.

Fig. 3 illustrates a tire having a tread with an annular groove.

Fig. 4 illustrates a side view of a lug used in the tread.

Fig. 4A illustrates an alternative embodiment of a lug used in a tread.

Fig. 5 illustrates a portion of the tread as it contacts a road surface.

Fig. 6 is a detailed illustration of a tread of the invention.

## DETAILED DESCRIPTION OF THE INVENTION

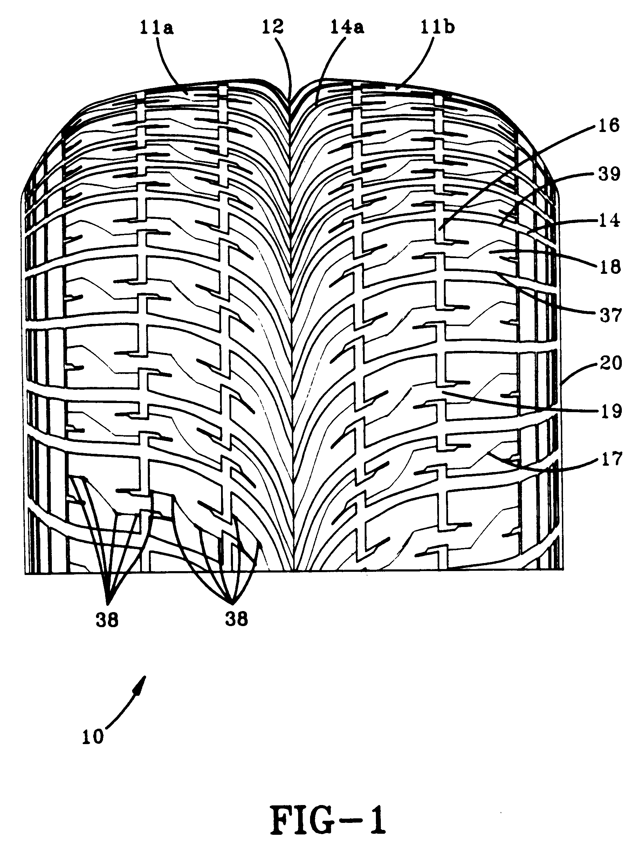

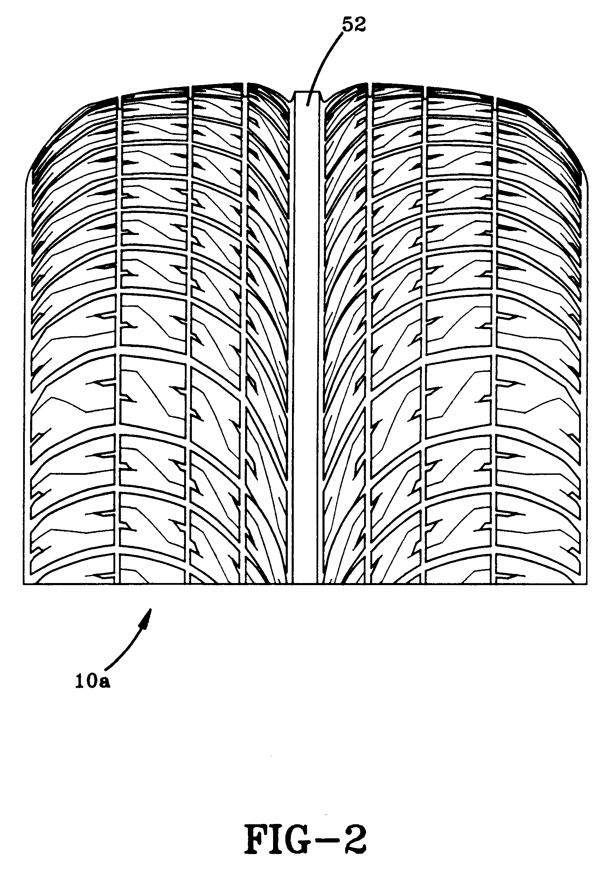

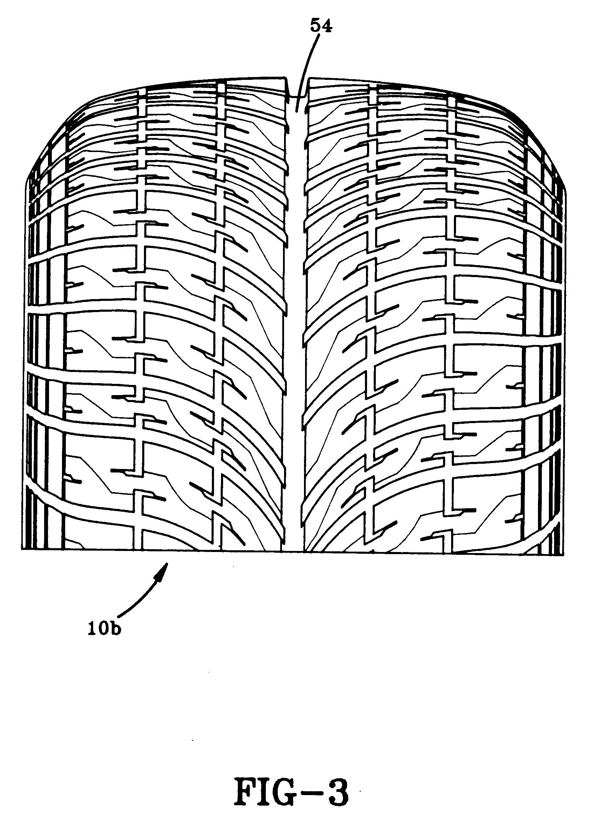

With reference now to Figs. 1, 2 and 3, alternative embodiments of the tire 10 are shown which employ different configurations of the illustrated tread 11. In Fig. 1 aqua channel 12 coincides with the equatorial plane of the tire and separates the tread into two annular parts, a rib 52 is present in the tread in the embodiment of Fig. 2, and annular groove 54 is present in the tread design illustrated in the embodiment of Fig. 3.

Those skilled in the art will recognize that the tread of the invention can be used without large annular features and that annular features need not coincide with the equatorial plane of the tire.

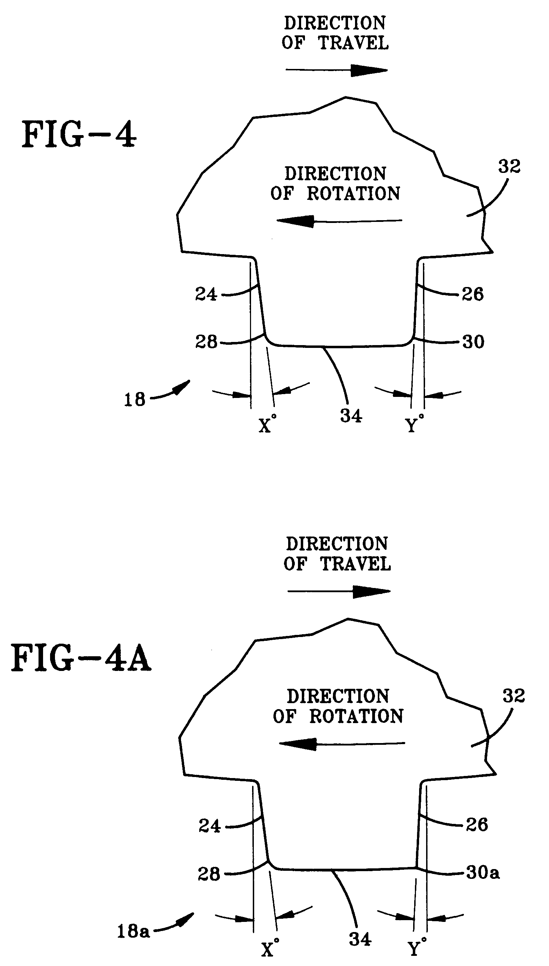

With reference now to Figs. 4 and 4a, lugs 18 in the tread are provided with a radiused leading edge 28 which causes the first contact of lug 18 with the road to be a rolling or rotating contact, reducing the energy of the impact of the lug against the road. Less energy of impact means less distortion, and since it is believed that at least some tire noise is caused by the acceleration of a distorted lug as it returns to its original shape, tire noise is reduced. Optionally, trailing edge 30 may also be radiused.

In the illustrated embodiment, a radius of 0.060 to 0.100 inch, preferably 0.080 inch is used.

It has been discovered that rounding the leading edges of the lugs also improves the grind appearance of the tire.

In a preferred embodiment lug 18 may be shaped to have a leading edge groove wall 24 having an open angle x of 3°-8°, preferably about 5°, and a trailing edge groove wall 26 having an open angle y of 0°-2°, preferably about 1°. Accordingly, the lugs have a trapezoidal shape having a base corresponding to the tread base 32 and a top corresponding to the land area 34 of the lug. The large open angle on the leading edge is believed to improve irregular wear properties because the angle has a buttressing effect on the lug stabilizing the leading edge and increasing its stiffness. Also, the large open angle reduces the angle of impact of the leading edge of the lug with the ground. Increased stiffness of the leading edge, and the lower angle of impact reduce the energy absorbed by the lug during impact meaning there is less energy in the lug when it snaps back to its normal shape, thereby reducing squirm and its consequent irregular wear.

Also, the wider groove area at the top of the groove may enhance the flow of water out of the footprint.

The smaller angled trailing edge is believed to help maintain braking traction.

Fig. 4A illustrates an alternative embodiment of lug 18a which has a sharp trailing edge 30a. A sharper trailing edge is believed to be advantageous in those applications where enhanced braking traction is desired.

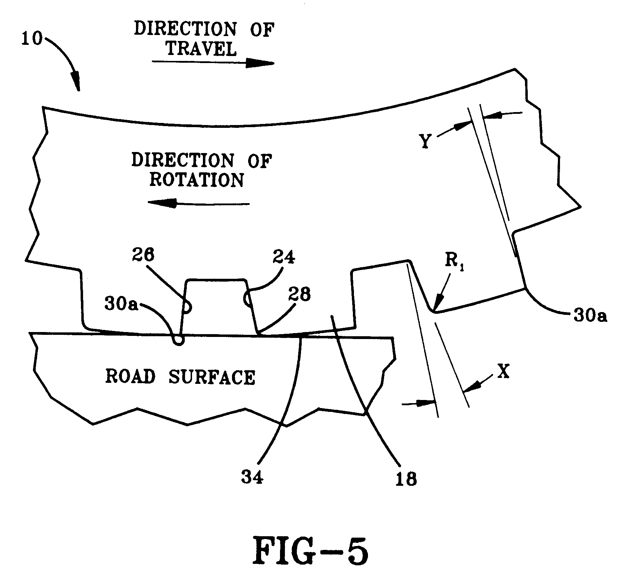

With reference now to Fig. 5, when a vehicle using the tire is traveling in the forward direction, tire 10 rotates in a clockwise direction. As a lug 18 rotates into a ground contacting position, the 5° angle of leading groove wall 24 causes the first contact of land area 34 with the road to be at a reduced angle as compared to a lug having a conventional 3° angle. The reduced angle of contact reduces the energy of impact between the lug 18 and the road surface.

The reduced angle of a trailing groove wall, when braking, causes trailing edge 30a to bite into the road surface when a substantial portion of lug 18 is still in contact with the road surface, and helps prevent water from getting under the lug. The buttressed shape of the lug also stabilizes the lug during braking. In the embodiment of tire 10, bridges 19 and tie bars 38 strengthen the action of the lugs by causing the lugs to act together.

Fig. 1 is illustrative of a specific embodiment of the invention and is referred to for the following description. With reference to Fig. 1, curved lateral grooves 14 initiate in aqua channel 12 and take an uninterrupted arcuate path to shoulder 20. Circumferential grooves 16 intersect lateral grooves 14 forming lugs 18. The curvature of the lateral grooves is such that the center or initial portion 14a of a lateral groove is in the leading edge of the footprint initiating the flow of water before the rest of the lateral groove enters the footprint. As the main portion of the lateral groove 14 enters the footprint, water in lateral groove 14 is expelled through the shoulder area with great force. The tread of the tire of the invention is directional in that, if the tire is mounted such that the center portion 14a of the lateral groove enters the footprint last, water would be channeled toward, instead of away from the center of the tire.

The tread 11 has an S-shaped lateral groove 14. For convenience in defining the various embodiments, as used herein, S-shaped includes the shape of an S and its mirror image. Also, a curved lateral groove (for example as shown in Fig. 2) can be said to be a portion of an S-shape (about 1/2 of an S).

Tread portions 11a and 11b are skewed. By skewed it is meant there is a pitch boundary shift between tread portion 11a and tread portion 11b. The pitch boundary shift may be, approximately, a 1/2 small pitch or a small pitch shift, a 1/2 medium pitch or a medium pitch shift, a 1/2 large pitch or a large pitch shift.

Pitching as it relates to tires, is well characterized by the prior art as illustrated by U. S. Patent 4,474,223 to Landers and references cited therein. In the illustrated embodiment, a 1/2 medium pitch shift is preferred.

Preferred for use in the tire is a tread compound of the type described in copending U. S. Patent applications, Serial No. 07/363,811 filed June 9, 1989 and Serial No. 07/213,011 filed June 29, 1988 incorporated herein by reference.

In the illustrated embodiment each nominal rib of the tire has 61-64 lugs that have substantially random arrangement of small pitches, medium pitches, and large pitches. The ratio of the length of a small pitch to the length of a medium pitch is about 1.1 to 1.23 and the ratio of the length of a small pitch to the length of a large pitch is about 1.2 to 1.53, depending on the size of the tire. In the illustrated embodiment, a small pitch is about 22.6 mm, a medium pitch is about 29.1 mm, and a large pitch is about 40.1 mm. Because of the curvature of lateral grooves 14, the pitch boundary is curved.

Lateral groove 14 is intersected by circumferential grooves 16 which are discontinuous, interrupted by bridges 19. For brevity of description, the term grooves embraces both the discontinuous grooves of tire 10 and the continuous grooves of tire 10a.

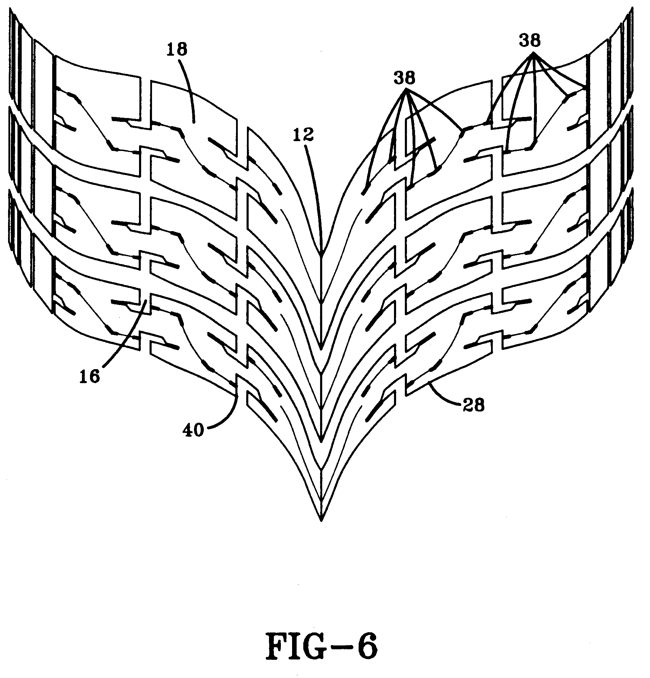

In the embodiment of tire 10, lugs or lug segments 18 between pairs of lateral grooves 14 may be characterized as a single element or block since lug segments 18 are connected to each other by bridges 19. Slots 17, in certain locations, have a tread depth of about 0.210 inch, substantially less than the slot depth of about 0.310 inch. The rubber between the bottom of the slot, in these locations, and the tread base are known as tie bars 38 (best illustrated in Fig. 6). Thus bridge 19 connects the leading portion 37 of one lug with the trailing portion 39 of an adjacent lug, and tie bars 38 and bridges 19 provide a continuous connection between lugs from the shoulder to the center of the tire.

Bridges 19 substantially eliminate groove wander since they prevent the circumferential grooves 16 from locking into longitudinal road grooves. Tie bars 38 cause each set of lugs between a pair of lateral grooves to act together, stiffening the tread and reducing the squirm of individual lugs. It is believed that these properties help reduce irregular wear as well as the noise of the tire.

The S-shape of the lateral groove extends the lateral groove deep into the shoulder area 20 and causes lateral groove 14 to curve into shoulder 20 at an angle. The curvature of the groove at the shoulder reduces the contact impact of the lugs at the shoulder area as the lug enters the footprint, because of a transitional entering of the lug into the footprint, thereby further reducing the noise of the tire.

The contour of the tread can be described as an approximation of a logarithmic spiral from the equatorial plane of the tire to each shoulder. The ratio of the radius at the shoulder to the radius at the center of the tire is about is 0.28-0.48, preferably about 0.38. It is believed that the contour of the tread causes a more even distribution of weight in the footprint of the tire which theoretically improves traction and wear properties.

With reference now to Fig. 6 and it can be seen that the curved lateral groove 16 causes a natural pitch shift or boundary shift between each lug 18 along a lateral groove. That is, the lugs are not lined up laterally. Since lugs 18 are slightly shifted relative to one another, the lugs enter the footprint during rotation of the tire at different times, and since it is believed that the entry and exit of a lug from a footprint is the primary cause of tire noise, it is believed that noise is dispersed, and the amplitudes of the various sound frequencies generated by the tire during its rotation are reduced. It is believed that skewing shifts the phase angles of the sound waves generated by the two portions of the tire reducing tire noise by destructive interference and reduction in the amplitudes of the various frequencies at given instants in time.

It can also be seen that the curvature of the lateral grooves corresponds to a curvature in the shape of the leading and trailing edges of lugs 18. Accordingly, when a lug 18 enters a footprint as the tire rotates, a relatively small edge or point 40 enters the footprint first, leading the way for the larger land area of the center of the lug. It is believed that the shape of the lug further reduces noise and irregular wear because the lug is eased or pried into the footprint by the small leading edge. The curved leading edges 28 of the lugs reduces or spreads out the contact impact of the lug by its transitional loading.

It is believed that all the design elements described herein contribute individually and collectively to reducing the noise level of the tire of the invention.

While specific embodiments of the invention have been illustrated and described, it will be recognized by those skilled in the art that the invention may be variously modified and practiced without departing from the spirit of the invention. The invention is limited only by the following claims.

## Claims

1. A directional tire tread for use on a paved surface having a net-to-gross ratio of 50% to 80% having lugs defined by lateral grooves and circumferential grooves characterized by said lugs having a radiused leading edge.

2. The tire tread of claim 1 wherein said lugs have radiused trailing edges.

3. The tire tread of claim 2 wherein said radius is 0.060-0.100 inch.

4. The tire tread of claim 2 wherein said radius is about 0.080 inch.

5. The tire tread of claim 1 in which said lateral grooves are arcuate wherein no two lugs along a lateral groove are in lateral alignment.

6. The tread of claim 5 in which said tire tread has means for separating said tread into at least two annular tread portions, wherein said portions are skewed such that no two lugs in said tire tread are in lateral alignment.

7. The tire tread of claim 6 in which skewing provides a boundary shift of 1/2 medium pitch between said at least two annular tread portions.

8. The tire tread of claim 6 in which said means for separating said tread into at least two portions comprises a rib.

9. The tire tread of claim 6 in which said means for separating said tread into at least two portions comprise an annular groove.

10. The tire tread of claim 6 in which said means for separating said tread into at least two portions comprises an aqua channel.

**FIG-1**

FIG-2

**FIG-3**

FIG-4

DIRECTION
OF TRAVEL

DIRECTION
OF ROTATION

32

24          26

28          30

18          34

X°          Y°

FIG-4A

DIRECTION
OF TRAVEL

DIRECTION
OF ROTATION

32

24          26

28          30a

18a          34

X°          Y°

DIRECTION OF
TRAVEL

DIRECTION OF
ROTATION

ROAD SURFACE

**FIG-5**

FIG-6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 700 762 (S.P.LANDERS)<br><br>* claims; figures 1,2 *<br>--- | 1,2,6,7,<br>9,10 | B60C11/08<br>B60C11/00 |
| Y | DE-A-3 324 706 (TOYO TIRE&RUBBER CO.LTD.)<br><br>* claims; figures 1-3 *<br>--- | 1,2,6,7,<br>9,10 | |
| A | US-A-1 956 011 (R.S.EVANS)<br>* page 2, right column, line 130 - line 149; figure 7 *<br>--- | 5 | |
| A | GB-A-2 046 188 (DUNLOP LTD.)<br>* page 3, line 32 - line 59; claims; figure 5 *<br><br>----- | 1,6,8,9 | |

| | TECHNICAL FIELDS SEARCHED (Int. Cl.5) |
|---|---|
| | B60C |

The present search report has been drawn up for all claims

| Place of search | Date of completion of the search | Examiner |
|---|---|---|
| THE HAGUE | 17 JUNE 1992 | BARADAT J.L. |